# EUROPEAN PATENT SPECIFICATION

(11) **EP 1 145 884 B1**
(45) Date of publication and mention of the grant of the patent: **14.06.2006**
(21) Application number: 01890114.0
(22) Date of filing: 12.04.2001
(51) Int. Cl.: B60H 1/00

(54) **Heater assembly for motor vehicle**
Heizungsanordnung für Kraftfahrzeug
Dispositif de chauffage pour automobiles

(30) Priority: 12.04.2000 GB 0009040
(43) Date of publication of application: 17.10.2001
(73) Proprietor: Intier Automotive Interiors Ltd., Kenilworth, Warwickshire CV8 2LY (GB)
(72) Inventor: Mills, Michael John, Warwickshire CU22 SQY (GB)
(74) Representative: Richardson, Kate

(56) References cited:
- EP-A- 0 799 734
- DE-A- 19 749 067
- US-A- 3 339 631
- US-A- 4 594 084

## Description

The invention relates to a heater assembly for a motor vehicle.

Vehicle heaters normally comprise a heat exchanger having heating surfaces over which an air flow generated by a fan is directed. A known vehicle heater is disclosed in US-A-4 531 671, which is considered as the closest prior art. This has a centrifugal fan which drives air through a heat exchanger which is heated by the engine coolant, so as to heat the flow of air. The fan has to ensure adequate flow capacity to make up for pressure losses as the air flows across the heating surfaces in the heat exchanger and around a cornered duct defining the flow path into and out of the heat exchanger. The whole unit is bulky and of an overall shape that makes its assembly and location somewhere in front of the vehicle dashboard difficult. The elaborate shapes of the housing and ducts of the unit make them expensive to manufacture. Units of different types and sizes are required for different motor vehicle models.

A more compact shape of vehicle heater is shown in US-A-3 918 637. This has an outer cylindrical casing in which is located, in sequence, an axial flow fan, a first heat exchanger for pre-heating the air and itself heated by hot exhaust gas from a burner, and a second heat exchanger for heating the pre-heated air and itself heated by the engine cooling water. This document is mainly concerned with the water pump for supplying the engine cooling water to the second heat exchanger.

One object of the present invention is to provide a vehicle heater assembly smaller than conventional units of the same performance.

Viewed from a first aspect the invention provides a heater assembly for a motor vehicle, comprising a heat exchanger defining a flow channel and having heating surfaces, and a fan for generating an air flow over the heating surfaces so that the air flow is heated by the heating surfaces, wherein the air flow has a rotating component as it progresses downstream along said flow channel, in the form of a vortex flow, and the heating surfaces are swept by the vortex flow.

The use of a vortex flow which sweeps the heating surfaces allows efficient heat exchange with a relatively low loss of pressure, thereby enabling a less powerful fan to be used as compared to a conventional heater of the same performance. The fan may therefore be smaller.

It is preferred for the fan to be an axial flow fan. Such a fan provides less pressure than a centrifugal fan but is less bulky. The lower pressure requirements of the heater assembly of the invention are condusive to the use of an axial flow fan.

As the heater assembly can be relatively small in its dimension transverse to the direction of air flow, it can be arranged in the dashboard with its longitudinal axis transverse to the vehicle. Further, its small bulk facilitates premounting the heater assembly to the dashboard before the entire dashboard and heater assembly is fitted to the vehicle as a unit.

The heater assembly preferably comprises a set of stationary blades downstream of the fan for creating or promoting the vortex flow.

In preferred embodiments, the heat exchanger comprises ribs protruding into the flow channel and defining a rotational flow path. Such ribs can both guide the air flow and provide, at least partly, the heating surfaces. The ribs may comprise right helicoid surfaces. The ribs preferably protrude radially inwardly.

The rotating component of the air flow may have a substantially constant radius of rotation as it progresses downstream. Preferably, the flow channel converges in the downstream direction. For example, the flow channel may be in the form of a converging cone. A converging flow channel tends to accelerate the flow and can thus compensate for the loss of speed caused by friction of the air with the heating surfaces, such as e.g. ribs.

Preferably the heat exchanger comprises an air deflector arranged substantially centrally in the flow channel. Such an air deflector can avoid a central zone with air speeds which are too low, such as low circumferential speeds because of a small radius, and/or low axial speeds because of the hub of the fan. Further, if a second heat exchanger is arranged downstream of a first heat exchanger which is arranged to converge the flow, a central air deflector may advantageously diverge the flow towards the heating surfaces of the second heat exchanger, e.g. radially inwardly protruding ribs.

The fan and the heat exchanger may be provided in a common, unitary housing. Preferably, however, the fan is provided in a fan module having a housing and the heat exchanger is provided in a heat exchange module having a housing, the housings being connected together in sequence in the direction of air flow. With such an arrangement, when the assembly is being manufactured, an appropriate fan module and heat exchanger module can be selected, according to the requirements of the vehicle, and then connected together. Thus different modules, such as fan modules with different fan sizes or heat exchanger modules of different length, can be assembled in different combinations to meet a variety of vehicle requirements. In some cases, a plurality of heat exchanger modules may be arranged in series to give a greater heating capacity, or to give both cooling and heating capacity if heating and cooling heat exchanger modules are arranged in series. The connectability of separate modules thus provides a versatile modular system.

Preferably the housings have respective upstream and downstream end configurations for connecting purposes, the fan module housing and the heat exchanger module housing having the same upstream end configuration as each other and the same downstream end configuration as each other. The provision of a standardised form of upstream end configuration and of downstream end configuration further facilitates the ability to assemble a heat exchanger by choosing appropriate modules for the vehicle requirements and then connecting their downstream and upstream ends together as required. Preferably, an air inlet duct module having the same downstream end configuration is provided, forming the first module in the direction of flow. Preferably, a distributor end-piece having the same upstream end configuration is provided, the distributor end-piece being arranged to divide the air flow and direct it to the required parts of the vehicle.

The modularity provided as described above is considered to be inventive in its own right. Viewed from another aspect therefore the invention provides a vehicle heater assembly comprising first and second modules, one being a fan module and the other being a heat exchanger module, the modules being arranged in sequence in the direction of air flow, each module having a respective housing and the housings being connected together end to end, wherein the housings have respective upstream and downstream end configurations for connecting purposes, the fan module housing and the heat exchanger module housing having the same upstream end configuration as each other and the same downstream end configuration as each other.

The housings of the modules may have flanged ends which may be bolted together. Preferably, however the housings are connected together in an interlocking manner, for example screwed together, but more preferably snap fitted together. They are advantageously removably connected together, to assist servicing or to allow replacement of a module.

Various materials may be used to make the housings, but preferably they are made of plastics. It is particularly preferred to use expanded plastics, e.g. expanded polypropylene, as such materials can provide heat insulation and sound absorption. These materials are not normally used to house vehicle heater assemblies.

It may be desired to provide a common outer casing in which the modules are received. However, this would add to costs, bulk and weight and it is therefore preferred for the housings to be connected together to form a common housing of the assembly. It is thus possible to provide modules which readily connect together to make up substantially the complete heater assembly.

Such an arrangement is considered to be inventive in its own right and accordingly viewed from a further aspect the invention provides a vehicle heater assembly for a motor vehicle, comprising a plurality of modules including at least a fan module and a heat exchanger module, the modules being in sequence in the direction of air flow, each module having a respective housing and the housings being connected together to form a common housing of the assembly.

The heater assembly may include means for filtering air. Advantageously, an exchangeable filter cassette is provided, preferably being laterally removable from the assembly. In a preferred embodiment, the filter cassette fits in an air inlet duct module. Such a module may also have an air recirculation flap.

Some embodiments of the invention will now be described, by way of example only, and with reference to the accompanying drawings, in which:
Figure 1 shows longitudinal cross-section through a vehicle heater assembly according to a first embodiment of the present invention;
Figures 1A and 1B show perspective views of the air inlet end of the vehicle heater;
Figure 2 shows a cross-sectional view, taken in the longitudinal direction of a vehicle, of a typical arrangement of the heater assembly located in a dashboard;
Figures 3 and 4 show respectively a longitudinal cross-sectional and a perspective view of a vehicle heater assembly according to a second embodiment of the present invention; and
Figure 5 shows a longitudinal cross-sectional view of a heater assembly according to a third embodiment of the present invention.

Like reference numerals refer to like components in the drawings.

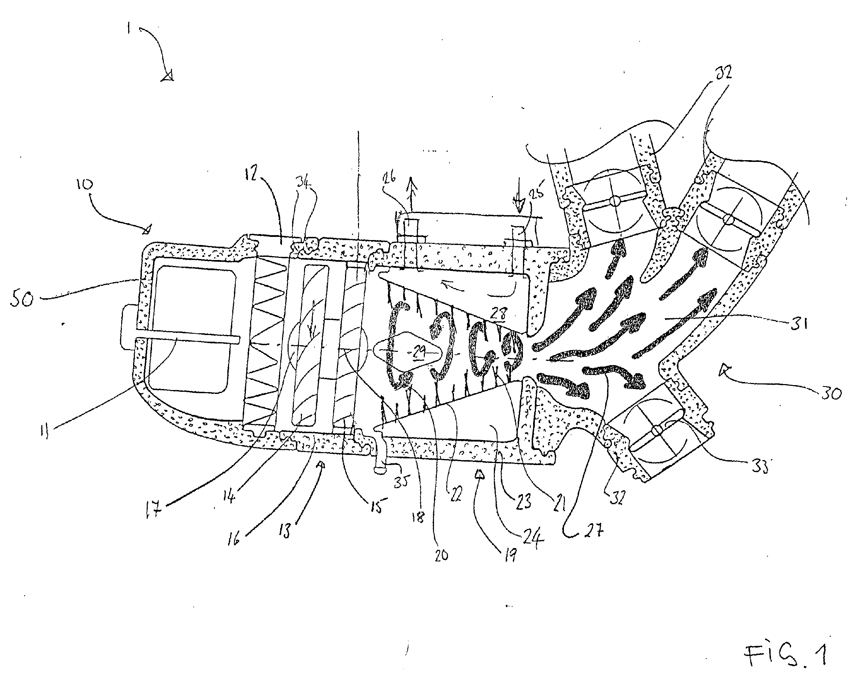

A vehicle heater assembly 1 is generally shown in Figure 1. The heater assembly 1 comprises a plurality of modules connected in line, namely an air inlet module 10, a fan module 13, a heat exchanger module 19, an air distribution manifold 30 and a series of outlet ducts 32. The air inlet module 10 has a housing 50 and is provided with a recirculation flap 11 which controls the flow of air into the heater assembly 1. In a first position, shown in Fig. 1A, the recirculation flap 11 allows air to enter the heater assembly 1 from outside of the vehicle's cabin. In a second position, as shown in Fig. 1B, the recirculation flap 11 allows air to be fed back from the vehicle's cabin into the heater assembly 1.

Immediately downstream of the recirculation flap 11 is an air filter cassette 12 which prevents airborne particles from passing through the heater assembly 1 and subsequently entering the vehicle's cabin. The air filter cassette 12 is removable from the air inlet module 10 in a radial direction to allow it to be replaced when necessary.

Downstream of the air inlet module 10 is a circular fan module 13 which is made up of a fan 14 positioned upstream of a set of stator blades 15. Both the fan module 13 and the stator blades 15 are positioned in a fan housing 16. The fan 14 is an electrically powered axial flow type, although a booster fan turbine type may equally be used. An electric motor for the fan 14 is provided in a centrally located hub 17. The central axis 18 of the fan 14 is coincident with the central axis of the cylindrical housing 16.

The heat exchanger module 19 is positioned directly downstream of the fan module 13 and has a housing 23 defining a conical flow channel 20, of circular cross-section. The housing 23 is connected at its upstream end to the downstream end of the fan housing 16. As the channel 20 extends downstream its diameter reduces. An air deflector 29 is positioned at the inlet region of the channel 20 in line with the central axis 18 of the fan 14. A drainage outlet 35 is provided at the base of the housing 23 of the heat exchanger module 19, although in this case the drainage outlet 35 is blocked off.

A number of sets of ribs 21 project radially inwardly from an outer wall 22 of the channel 20 and these define a series of coils. In the embodiment shown in Figure 1, there are two sets of spiral ribs 21 and each set has a different radial dimension from the outer wall 22 of the channel 20. An annular chamber 24 is arranged between the housing 23 and the channel 20. An inlet valve 25 and an outlet valve 26 are provided through the housing 23 to the annular chamber 24, for allowing engine coolant water to flow into and out of the chamber.

Located downstream of the heat exchanger module 19 is the air distribution manifold 30. A distribution chamber 31 of the air distribution manifold 30 is connected to a series of outlet ducts 32 which lead into the vehicle's cabin via window demist vents, instrument panel air vents and a footwell vent. Each of the ducts 32 is provided with a valve 33 to control the flow of air through the duct 32.

The design of the heater assembly 1 of the present invention readily lends itself to a modular construction. For example, the air inlet module 10, fan module 13, heat exchanger module 19 and air distribution manifold 31 are each self contained modular units. During the manufacture of the heater assembly 1 each of these modular units is made separately and then they are joined at their respective upstream and downstream ends. At the upstream end of each module a male connecting portion 34a is provided, and at the downstream end of each module a female connecting portion 34a is provided. Each male portion has a radially projecting annular rib arranged to snap fit into a corresponding annular groove in the female portion. Thus snap fit connections 34 are provided between the modules. These form a substantially airtight seal between the modules. The module housings are made from expanded plastic.

In operation, air enters the heater assembly 1 through the air inlet module 10, the source of the air being dependent on the position of the recirculation flap 11. The air then passes through the air filter cassette 12 and any airborne particles become trapped. The air is then accelerated by the fan 14 to generate an airflow 27 which is represented by arrows in the Figures. The airflow 27 is directed through the stator blades 15 which introduce a rotational component into the airflow 27 and then travels downstream rotating about the central axis 18. A vortex flow is thus generated.

The airflow 27 then enters the channel 20 formed in the heat exchanger module 19. The ribs 21 formed on the outer wall 22 tend to maintain the vortex flow.

The air deflector 29 is positioned centrally in the channel 20, downstream of the fan module 13, to prevent the formation of a region of low velocity airflow. The speed of the airflow 27 in this central region is reduced because of the presence of the hub 17 of the fan 14 and because of the small radius.

The reduction in the cross sectional area of the channel 20 tends to increase the speed of the airflow 27. Thus the convergence of the channel 20 compensates for the loss of speed of the airflow 27 which is caused by frictional forces between the airflow 27 and the outer wall 22 of the channel 20 and the ribs 21.

The heat exchanger module 19 is used as a heater for the airflow 27. The fluid 28 introduced into the annular chamber 24 through the inlet valve 25 is cooling water which is heated by the vehicle's engine. As the airflow 27 travels through the channel 20 the heat from the outer wall 22 of the channel 20 and the ribs 21 is transferred to the airflow 27, thus increasing its temperature.

Upon exiting the heat exchanger module 19, the airflow 27 enters the distribution chamber 31 of the outlet air distribution manfiold 30 wherein it is directed to the outlet ducts 32 to be introduced into the vehicle's cabin as described above. The airflow 27 into the cabin is controlled by the valves 33 located in each duct 32.

The positioning of the heat and ventilation system 1 in the dashboard of a vehicle and the outlets from the outlet ducts 32 into the vehicle's cabin are shown in Figures 2.

It may be desired to incorporate an air conditioning heat exchanger module 41 into a heater assembly 40, as shown in Figures 3 and 4. The air conditioning heat exchanger module 41 is arranged in series with the heat exchanger module 19. The air conditioning heat exchanger module 41 is connected, via the inlet valve 25 and outlet valve 26, to a source of fluid 43 having a temperature lower than that of the air entering the air inlet module 10 and the downstream heat exchanger module 19 is connected, via the inlet valve 25 and outlet valve 26, to a supply of engine coolant 28 having a temperature above that of the air entering the air inlet module 10. In the case of the air conditioning module 41, the drainage outlet 35 is open to allow condensate to drain from the module. Appropriate apertures are provided in the ribs 21 to permit drainage down the slope of the wall 22. In the module 41 the air deflector 29 acts as a diffuser in the channel 20, to deflect the air radially outwardly.

By controlling the flow of fluid 43, 28 into the air conditioning heat exchanger module 41 and the heating heat exchanger module 19 it is possible to control the temperature of the airflow 27 entering the vehicle's cabin. For example to raise the temperature of the airflow 27, fluid 28 having a temperature greater than that of the air entering the air inlet module 10 is introduced into the annular chamber 24 of the heating heat exchanger module 19 and the flow of fluid 43 having a temperature lower than that of the air entering the air inlet module 10 into the annular chamber 24 of the air conditioning heat exchanger module 41 is prevented. Thus, the temperature of the surface 22 of the passage 20 in the heating heat exchanger module 19 is raised above that of the air entering the air inlet module 10. The reverse situation is applied if the temperature of the airflow 27 leaving the heater assembly 40 is to be lowered.

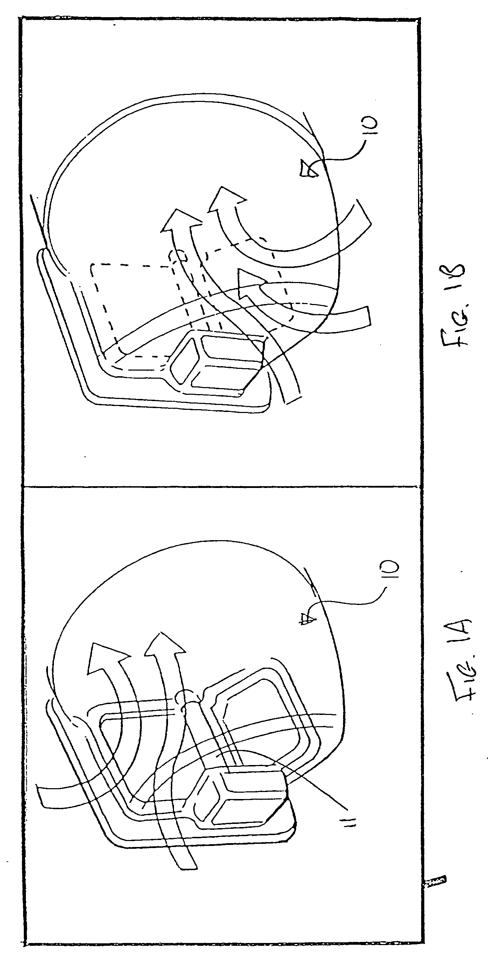

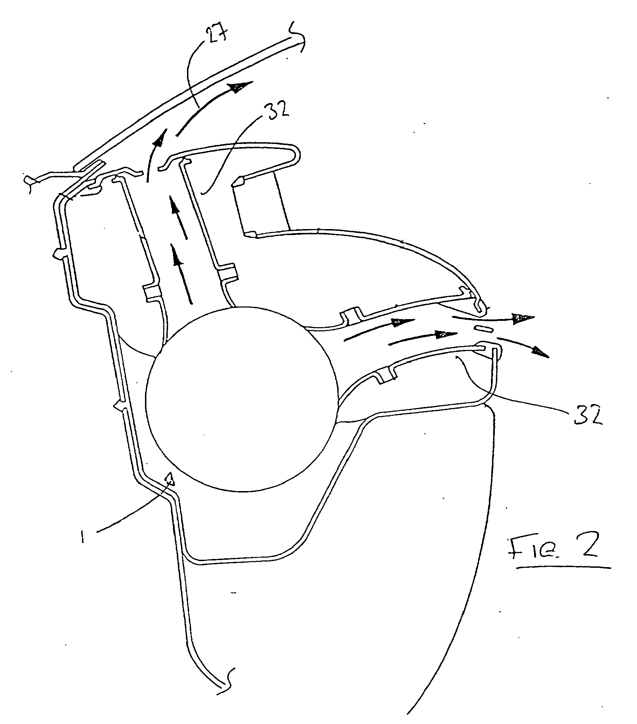

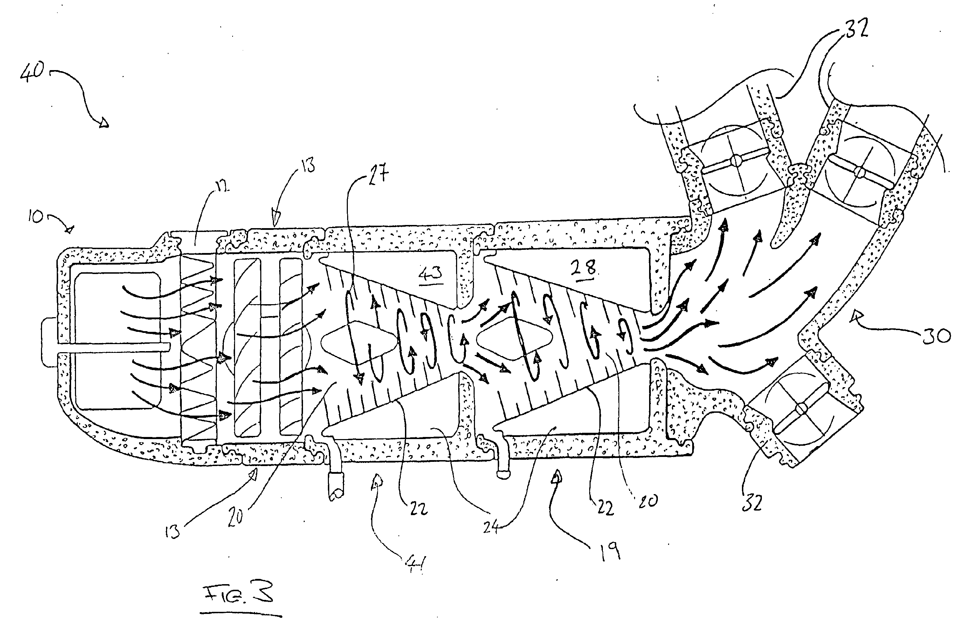

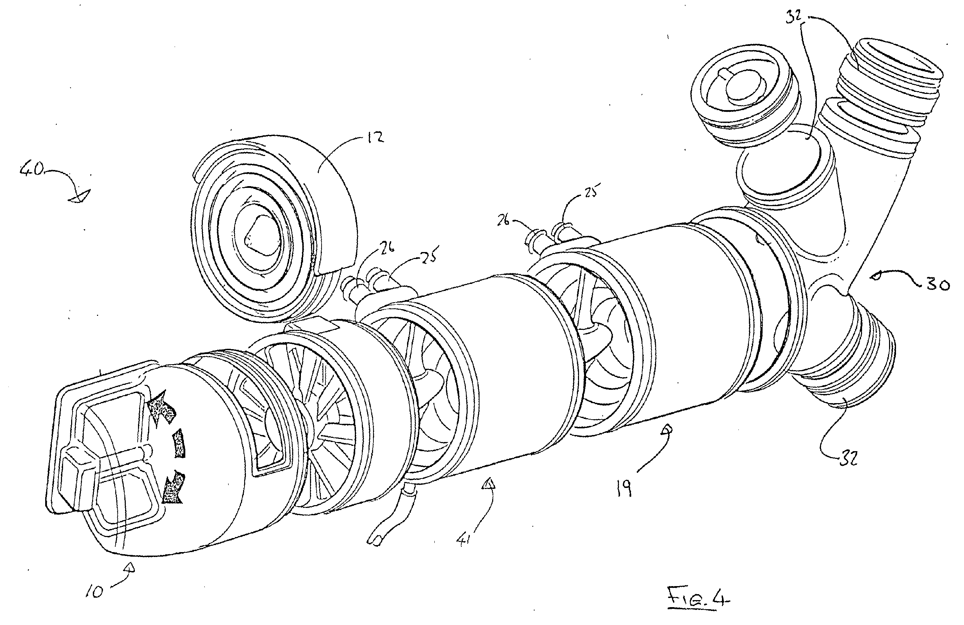

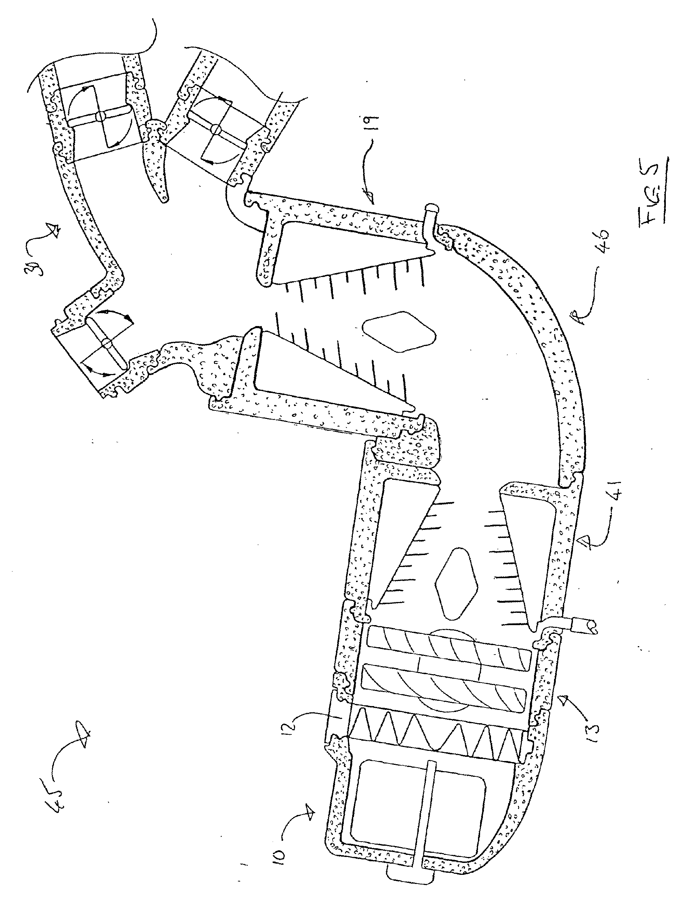

A heat and ventilation system 45 according to a third embodiment of the present invention is shown in Figure 5. In this embodiment an adaptor module 46 is provided between an air conditioning heat exchanger module 41 and a heating heat exchanger module 19. The adaptor module 46 offsets the central axis of the air conditioning vortex heat exchanger 47 and the heater vortex heat exchanger 48 by ninety degrees. The operation of this embodiment of the heater assembly is generally the same as that of the previous embodiment. However, this arrangement offers a different option in positioning the heater assembly in the dashboard of a vehicle.

It will be appreciated by those skilled in the art that a number of variations and modifications may be made without departing from the scope of the present invention. For example, the ribs formed in the vortex heat exchanger need not be restricted to a position on the inner surface of the passage but may alternatively, or additionally, be applied to the outer surface of the air deflector located in the passage.

## Claims

1. A heater assembly (1) for a motor vehicle comprising a heat exchanger defining a flow channel (20) and having a heating surfaces (22), and a fan (14) for generating an air flow over the heating surfaces (22) so that the air flow is heated by the heating surfaces, **characterised in that** in use the air flow has a rotating component as it progresses downstream along said flow channel (20), in the form of a vortex flow, and the heating surfaces (22) are swept by the vortex flow.

2. A heater assembly as claimed in claim 1, wherein the fan (14) is an axial flow fan.

3. A heater assembly as claimed in claim 1 or claim 2, comprising a set of stationary blades (15) downstream of the fan (14) for creating or promoting the vortex flow.

4. A heater assembly as claimed in claim 1, 2 or 3, wherein the heat exchanger comprises ribs (21) protruding into the flow channel (20) and defining a rotational flow path.

5. A heater assembly as claimed in any preceding claim, wherein the flow channel (20) converges in the downstream direction.

6. A heater assembly as claimed in any preceding claim, wherein the heat exchanger comprises an air deflector (29) arranged substantially centrally in the flow channel (20).

7. A heater assembly as claimed in any preceding claim, wherein the fan (14) is provided in a fan module (13) having a housing (16) and the heat exchanger is provided in a heat exchanger module (19) having a housing (23) the housings (16, 23) being connected together in sequence in the direction of air flow.

8. A heater assembly as claimed in claim 7, wherein the housings (16, 23) have respective upstream and downstream end configurations for connecting purposes, the fan module housing (16) and the heat exchanger module housing (23) having the same upstream end configuration as each other and the same downstream end configuration as each other.

9. A heater assembly as claimed in claim 7 or 8, wherein the housings (16, 23) are connected together in an interlocking manner.

10. A heater assembly as claimed in claim 7, 8 or 9, wherein the housings (16, 23) are made from expanded plastics.

11. A heater assembly as claimed in any of claims 7 to 10, wherein the housings (16, 23) are connected together to form a common housing of the assembly.

12. A heater assembly as claimed in any of claims 7 to 11, further comprising an air inlet duct module (10) having an exchangeable filter cassette (12).

## Patentansprüche

1. Heizungsanordnung (1) für ein Kraftfahrzeug, die einen Wärmetauscher, der einen Durchflußkanal (20) definiert und Heizoberflächen (22) aufweist, und einen Ventilator (14) zum Erzeugen einer Luftströmung über die Heizoberflächen (22) umfaßt, so daß die Luftströmung durch die Heizoberflächen erhitzt wird, **dadurch gekennzeichnet, daß** im Gebrauch die Luftströmung eine Rotationskomponente aufweist, wenn sie sich stromabwärts entlang besagten Durchflußkanals (20) bewegt, in Form einer Wirbelströmung, und die Heizoberflächen (22) von der Wirbelströmung überstrichen werden.

2. Heizungsanordnung nach Anspruch 1, **dadurch gekennzeichnet, daß** der Ventilator (14) ein Axialströmungsventilator ist.

3. Heizungsanordnung nach Anspruch 1 oder Anspruch 2, die einen Satz stationärer Blätter (15) stromabwärts des Ventilators (14) zur Schaffung oder Förderung der Wirbelströmung umfaßt.

4. Heizungsanordnung nach Anspruch 1, 2 oder 3, **dadurch gekennzeichnet, daß** der Wärmetauscher Rippen (21) umfaßt, die in den Durchflußkanal (20) vorstehen und einen Rotationsströmungsweg definieren.

5. Heizungsanordnung nach einem der vorangehenden Ansprüche, **dadurch gekennzeichnet, daß** der Durchflußkanal (20) in der stromabwärtigen Richtung konvergiert.

6. Heizungsanordnung nach einem der vorangehenden Ansprüche, **dadurch gekennzeichnet, daß** der Wärmetauscher einen Luftablenker (29) umfaßt, der im wesentlichen mittig im Durchflußkanal (20) angeordnet ist.

7. Heizungsanordnung nach einem der vorangehenden Ansprüche, **dadurch gekennzeichnet, daß** der Ventilator (14) in einem Ventilatormodul (13) mit einem Gehäuse (16) vorgesehen ist und der Wärmetauscher in einem Wärmetauschermodul (19) mit einem Gehäuse (23) vorgesehen ist, wobei die Gehäuse (16, 23) miteinander in der Reihenfolge in der Richtung der Luftströmung verbunden sind.

8. Heizungsanordnung nach Anspruch 7, **dadurch gekennzeichnet, daß** die Gehäuse (16, 23) für Verbindungszwecke entsprechende Konfiguration am stromaufwärtigen und stromabwärtigen Ende besitzen, wobei das Ventilatormodulgehäuse (16) und das Wärmetauschermodulgehäuse (23) dieselbe Konfiguration am stromaufwärtigen Ende besitzen wie das jeweils andere und dieselbe Konfiguration am stromabwärtigen Ende wie das jeweils andere.

9. Heizungsanordnung nach Anspruch 7 oder 8, **dadurch gekennzeichnet, daß** die Gehäuse (16, 23) miteinander in einer ineinandergreifenden Art und Weise verbunden sind.

10. Heizungsanordnung nach Anspruch 7, 8 oder 9, **dadurch gekennzeichnet, daß** die Gehäuse (16, 23) aus Schaumkunststoff hergestellt sind.

11. Heizungsanordnung nach einem der Ansprüche 7 bis 10, **dadurch gekennzeichnet, daß** die Gehäuse (16, 23) miteinander verbunden sind, um ein gemeinsames Gehäuse der Anordnung zu bilden.

12. Heizungsanordnung nach einem der Ansprüche 7 bis 11, die weiter ein Lufteinlaßleitungsmodul (10) mit einer austauschbaren Filterkassette (12) umfaßt.

## Revendications

1. Ensemble de chauffage (1) pour un véhicule motorisé comprenant un échangeur de chaleur ayant des surfaces chauffantes (22) définissant un canal d'écoulement (20), et un ventilateur (14) permettant de générer un écoulement d'air sur les surfaces chauffantes (22), de telle sorte que l'écoulement d'air est chauffé par les surfaces chauffantes, **caractérisé en ce que**, en service, l'écoulement d'air a une composante rotative lorsqu'il progresse vers l'aval le long dudit canal d'écoulement (20), sous la forme d'un écoulement turbulent, et les surfaces chauffantes (22) sont balayées par l'écoulement turbulent.

2. Ensemble de chauffage selon la revendication 1, dans lequel le ventilateur (14) est un ventilateur à écoulement axial.

3. Ensemble de chauffage selon la revendication 1 ou la revendication 2, comprenant un groupement de pales immobiles (15) en aval du ventilateur (14) permettant de créer ou de favoriser l'écoulement turbulent.

4. Ensemble de chauffage selon l'une quelconque des revendications 1, 2 ou 3, dans lequel l'échangeur de chaleur comprend des nervures (21) faisant saillie dans le canal d'écoulement (20) et définissant une trajectoire d'écoulement rotative.

5. Ensemble de chauffage selon l'une quelconque des revendications précédentes, dans lequel le canal d'écoulement (20) converge dans la direction aval.

6. Ensemble de chauffage selon l'une quelconque des revendications précédentes, dans lequel l'échangeur de chaleur comprend un déflecteur d'air (29) agencé sensiblement de manière centralisée dans le canal d'écoulement (20).

7. Ensemble de chauffage selon l'une quelconque des revendications précédentes, dans lequel le ventilateur (14) est prévu dans un module de ventilateur (13) ayant un boîtier (16), et l'échangeur de chaleur est prévu dans un module d'échangeur de chaleur (19) comportant un boîtier (23), les boîtiers (16, 23) étant reliés l'un à l'autre de manière séquentielle dans la direction de l'écoulement d'air.

8. Ensemble de chauffage selon la revendication 7, dans lequel les boîtiers (16, 23) ont des configurations d'extrémité amont et aval respectives à des fins de raccordement, le boîtier du module de ventilateur (16) et le boîtier du module d'échangeur de chaleur (23) ayant la même configuration d'extrémité amont l'un que l'autre et la même configuration d'extrémité aval l'un que l'autre.

9. Ensemble de chauffage selon la revendication 7 ou 8, dans lequel les boîtiers (16, 23) sont reliés ensemble d'une manière par verrouillage.

10. Ensemble de chauffage selon la revendication 7, 8 ou 9, dans lequel les boîtiers (16, 23) sont réalisés à partir de plastique expansé.

11. Ensemble de chauffage selon l'une quelconque des revendications 7 à 10, dans lequel les boîtiers (16, 23) sont reliés ensemble afin de former un boîtier commun de l'ensemble.

12. Ensemble de chauffage selon l'une quelconque des revendications 7 à 11, comprenant en outre un module de conduit d'admission d'air (10) ayant une cassette de filtre remplaçable (12).
